# EUROPÄISCHE PATENTSCHRIFT

(11) **EP 2 637 273 B1**
(45) Veröffentlichungstag und Bekanntmachung des Hinweises auf die Patenterteilung: **22.07.2015**
(21) Anmeldenummer: 13305235.7
(22) Anmeldetag: 01.03.2013
(51) Int. Cl.: H02G 3/10

(54) **Geräteträger für Leitungsführungskanäle mit schwenkbarem Oberteil**
Device holder for cable guidance channels with pivoting top
Support d'appareil pour des canaux de guidage de conduites avec partie supérieure pivotante

(30) Priorität: 08.03.2012 DE 202012002279 U
(43) Veröffentlichungstag der Anmeldung: 11.09.2013
(73) Patentinhaber: Tehalit GmbH, 67716 Heltersberg (DE)
(72) Erfinder: Eberle, Patrick, 66292 Riegelsberg (DE); Speiser, Mathias, 67718 Schmalenberg (DE)
(74) Vertreter: Nuss, Laurent

(56) Entgegenhaltungen:
- EP-A2- 0 836 251
- WO-A1-2010/058529
- DE-B3-102010 006 610
- DE-U1- 20 119 664
- DE-U1-202011 106 257
- GB-A- 1 259 436
- JP-A- H0 393 415
- US-A1- 2003 122 536

## Beschreibung

Die vorliegende Erfindung betrifft einen Geräteträger für Leitungsführungskanäle, bestehend aus einem Unterteil und einem in unterschiedlichen Positionen schwenkbaren Rahmen.

Geräteträger dienen der Installation von Elektroinstallationsgeräten, beispielsweise Steckdosen oder Datenanschlüssen an einen Wandkanal oder Sockelleistenkanal. Solche gattungsgemäßen Geräteträger sind beispielsweise in der EP 0 159 554 A, EP 0 239 456 A, FR 2770047 A, EP 0 702 442 B oder DE 20 2009 009 353 U1 JP 40393415 beschrieben. Der Geräteträger besteht aus einem Unterteil mit einem Gehäuse zur Aufnahme der Elektroinstallationsgeräte. Über die Bodenplatte des Gehäuses wird der Geräteträger neben dem Kabelkanal an die Wand oder Sockelleiste befestigt.

Bei bekannten Lösungen ist der Rahmen, der auf den Geräteträger aufgesetzt wird, abnehmbar oder schwenkbar. Dadurch soll die Montage der Elektroinstallationsgeräte ermöglicht bzw. erleichtert werden. Nach erfolgter Montage wird der Rahmen auf das Unterteil des Geräteträgers aufgesetzt. Nachteilig ist jedoch der relativ hohe Montageaufwand bei solchen Lösungen. Wünschenswert wäre eine Geräteträgerlösung, bei der die Elektroinstallationsgeräte im Geräteträger frei zugänglich gemacht werden können, um beispielsweise nachträgliche Installationen oder ein Messen von Datengeräten zu ermöglichen.

In der DE 201 19 664 U 1 wird deshalb eine Gerätedose zur halternden Aufnahme von mindestens einem Elektroninstallationsgerät, beispielsweise einem Schalter, einer Steckdose oder dergleichen beschrieben. Die Gerätedose besteht aus einem einseitig eine Montageöffnung aufweisenden Dosenkörper, der einen separaten, an dem Dosenkörper lösbar befestigbaren Geräteträger zur vormontierten Halterung mindestens eines Geräteeinsatzes umfasst. Der Geräteträger ist in mindestens zwei unterschiedlichen Relativlagen an dem Dosenkörper halterbar. Dadurch werden eine Vormontageposition und eine Montageposition möglich. Viele der bekannten Lösungen sind jedoch umständlich zu handhaben oder eignen sich nur beschränkt für Geräteträger, die für Sockelleistenkanäle bzw. Wandkanäle bestimmt sind.

Vor diesem Hintergrund ist es daher Aufgabe der vorliegenden Erfindung, einen verbesserten Geräteträger für Leitungsführungskanäle bereitzustellen, bei dem der Rahmen von einer Parkposition in eine Montageendposition schwenkbar ist, damit der Monteur bei der Montage beide Hände frei hat, um beispielsweise Elektroinstallationsgeräte im Unterteil des Geräteträgers an die Kabel und Leitungen anzuschließen oder Messungen an Datengeräten durchzuführen.

Diese Aufgabe wird gelöst durch einen Geräteträger mit den Merkmalen des Anspruchs 1. Bevorzugte Ausführungsformen finden sich in den Unteransprüchen wieder.

Der erfindungsgemäße Geräteträger für Leitungsführungskanäle besteht aus einem Unterteil und einem von einer Parkposition in eine Montageendposition schwenkbaren Rahmen. Üblicherweise wir der Geräteträger über das Unterteil an einer Wand oder in einen Kabelkanal montiert. Der auf dem Unterteil aufsetzbare Rahmen ist über Drehbolzen als Drehachse nach oben schwenkbar. Das Unterteil des Geräteträgers besteht aus einem Gehäuse mit einem Boden und Seitenelementen, in denen oben und unten nach zur Außenseite offene Schlitze eingearbeitet sind. Die Richtungsangaben "oben" und "unten" bezeichnen die typische Einbaurichtung des Geräteeinbauträgers, d.h. die Schlitze sind übereinander angeordnet und nach vorne zur kanalwegweisenden Seite offen.

Der Rahmen wird in die Schlitze über vorne und hinten mit den Schlitzen des Unterteils kooperierende seitlich herausstehende Drehbolzen eingeführt. Insgesamt sind vier Drehbolzen für den Rahmeneinsatz vorgesehen. Die Schlitze gehen jeweils in ein horizontales Langloch über, die in Einbaurichtung von oben nach unten verlaufen und dafür sorgen, dass der Rahmen gegenüber dem Unterteil in die endgültige Montageposition verschoben werden kann. Der Abstand der Drehbolzen auf einer Seite entspricht dem Abstand der Schlitze am Unterteil, damit die Drehbolzen in die Schlitze einführbar sind. Eine Engstelle bei den Langlöchern sorgt dafür, dass der Rahmen nicht mehr herausrutscht oder verschoben werden kann. Zusätzlich ist zum Verschiebeschutz eine seitliche Verriegelungszunge am Rahmen vorgesehen, die mit einem stufenförmigen Klemmprofil der Seitenelemente kooperiert. Vorzugsweise ist die Verriegelungszunge leistenförmig an den Seitenelementen des Rahmens und federnd ausgestaltet.

Durch die am Rahmen ausgebildeten Drehbolzen kann dieser von unten nach oben in die Parkposition geschwenkt und in dieser über eine am Unterteil ausgebildeten Haltenase gehalten werden. Dies ermöglicht bei einer Wandkanalinstallation den Zugriff auf die im Inneren angeordneten Elektroinstallationsgeräte, so dass diese bequem an Daten- bzw. Stromleitungen angeschlossen werden können. Ferner ist die Parkposition auch zum sporadischen Messen von Datengeräten vorteilhaft. Weil der Rahmen in der Parkposition gehalten wird, hat der Monteur bei der Montage beide Hände für diese Tätigkeiten frei.

Vorzugsweise ist zum Halten der Parkposition am Rahmen wenigstens eine Rippe ausgebildet, die den Rahmen im geschwenkten Zustand über eine am Unterteil ausgebildete Haltenase hält.

Der Rahmen liegt am Ende der Anschlussarbeiten zunächst auf der oberen Kante des Klemmprofils auf. Durch Aufsetzen des Geräteträgerdeckels werden an dem Rahmen die beiden seitlichen Verriegelungszungen nach unten gedrückt. Dabei gleitet die Verriegelungszunge über die Kante des Klemmprofils und klemmt sich in eine an der Unterseite des Klemmprofils ausgebildete Nut. Soll der Rahmen entfernt werden, so wird die Verriegelungszunge beim Abnehmen des Geräteträgerdeckels wieder freigegeben und der Rahmen kann nach oben geschoben und anschließend aufgeklappt werden.

Zum Erreichen der Montageendposition wird der Rahmen mit den Drehbolzen nach unten gedrückt und über diese anschließend innerhalb der Langlöcher verschoben. Vorzugsweise besitzen die Langlöcher eine Engstelle, damit der Rahmen fest mit dem Unterteil verrastet. Die Verriegelungszunge des Rahmens und das seitliche Klemmprofil des Unterteils bewirken ferner eine Verschiebesicherung für diese Position.

Zum Anzeigen der Verschiebe- und Öffnungsrichtung bei der Montage sind die Endplatten vorzugsweise pfeilförmig ausgestaltet.

Die erfindungsgemäße Lösung ermöglicht ein Arbeiten an den Geräten oder deren Anschluss durch Hochschwenken und Halten des Rahmens am Unterteil. Der Rahmen kann auch vollständig vom Unterteil ausgebaut und um einen Winkel von 180 Grad gedreht eingebaut werden. Dadurch kann ein Anschluss von Kabel und Leitungen auch außerhalb des Rahmens erfolgen. Diese Lösung trägt dazu bei, dass mit demselben Rahmen/Unterteil unterschiedliche Geräteeinbaulösungen verwirklicht werden können.

Die Erfindung wird in den nachfolgenden Zeichnungen näher erläutert.
Figur 1 zeigt eine Ausführungsform des Geräteträgers bestehend aus Unterteil und Rahmen,
Figur 2 zeigt den Geräteträger in Parkposition,
Figur 3 zeigt den Geräteträger mit aufgesetztem Geräteträgerdeckel.

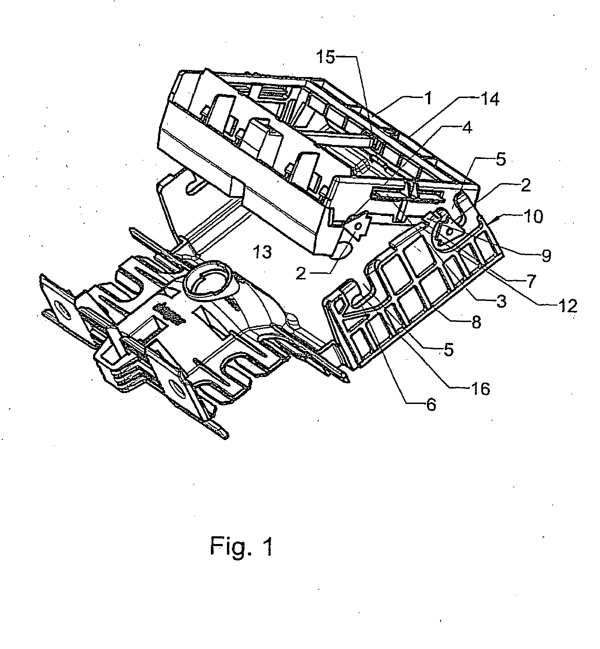

In der Figur 1 ist eine Ausfuhrungsform des erfindungsgemäßen Geräteträgers gezeigt. Dieser besteht aus einem gehäuseartigen Unterteil 10, das aus einem Boden 13 sowie zwei Seitenelementen 8 besteht. In den Seitenelementen 8 sind vorne und hinten nach oben offene Schlitze 5 eingearbeitet. Die Schlitze 5 gehen jeweils in ein horizontales Langloch 6 über. Die Langlöcher weisen eine Engstelle 16 auf.

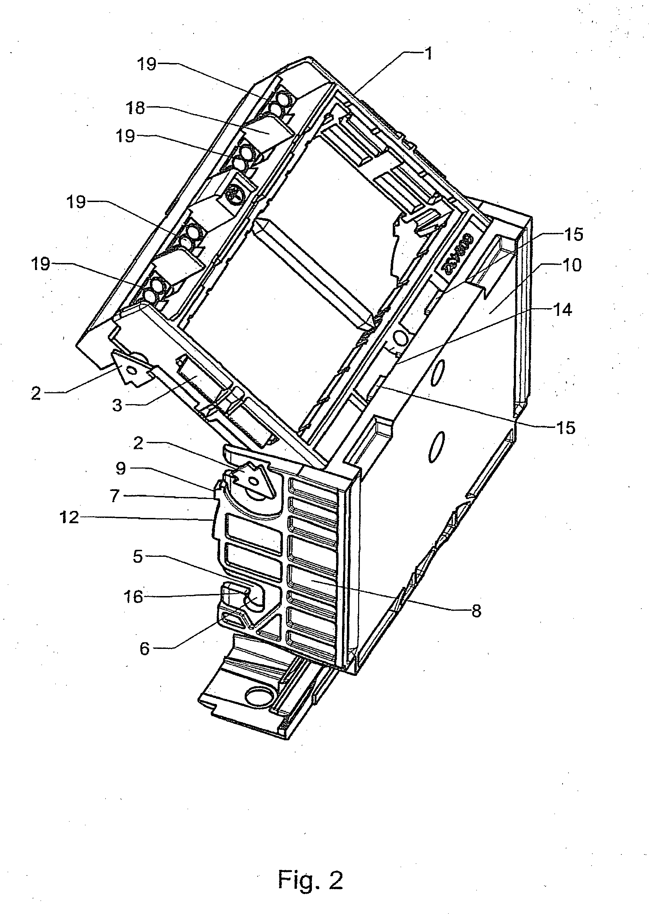

Der Rahmen 1 besteht aus Stegen und Seitenteilen, an dessen Stirnseiten jeweils zwei herausstehende Drehbolzen 4 ausgebildet sind. Die Drehbolzen 4 werden von einer pfeilförmigen Endplatte 2 terminiert. Diese zeigt dem Monteur die Verschiebe- und Öffnungsrichtung für den Rahmen 1 gegenüber dem Unterteil 10 an. Zum Aufsetzen des Rahmens 1 auf das Unterteil 10 werden die Drehbolzen 4 in den nach oben offenen Schlitz 5 der Seitenelemente 8 des Unterteils 10 eingeführt. Dabei liegen die seitlichen Verriegelungszungen 3 auf der Kante 9 eines an den Seitenelementen 8 des Unterteils 10 an der Oberseite ausgebildeten Klemmprofils 12 auf (vgl. Figur 2). Zum Erreichen der Montageendposition wird der Rahmen 1 dann innerhalb der Langlöcher 6 verschoben. Nach Passieren der Engstelle 16 ist der Rahmen 1 fest mit dem Unterteil 10 verrastet. Um ein unbeabsichtigtes Verschieben des Rahmens 1 zu vermeiden, verklemmt sich die Stirnkante der Verriegelungszunge 3 mit einer am Klemmprofil 12 ausgebildeten Nut 7.

Für eine aufwändige Montage (beispielsweise, um Kabel oder Leitungen anzuschließen) kann der Rahmen 1 auch vollständig aufgeklappt werden.

In der Figur 2 ist die Parkposition des Geräteträgers gezeigt. Der Rahmen 1 ist nach oben geschwenkt, wodurch der Zugang in das Geräteträgerinnere, z.B. zu den Anschlüssen ermöglicht wird. Für die Parkposition wird der Rahmen 1 nach hinten geschwenkt und über einen erfindungsgemäßen Mechanismus gehalten. Dieser besteht aus einer am Rahmen 1 ausgebildeten Rippe 14, die sich an einer Haltenase 15 des Unterteils 10 abstützt, um den Rahmen 1 in Schwenkposition zu halten. Für die Montageposition wird der Rahmen 1 nach unten zum Unterteil 10 gedrückt. Der Anschluss der Kabel und Leitungen erfolgt an den Kontakten 19, die in eigens dafür vorgesehenen Taschen 18 untergebracht sind.

Um auch eine Verdrahtung außerhalb des Rahmens 1 zu verwirklichen, ist der Rahmen 1 in einer besonderen Ausführungsform komplett aus dem Unterteil 10 herausnehmbar und um 180° versetzt einbaubar. Dadurch eignet sich der Rahmen 1 für unterschiedliche Geräteeinbaulösungen. Deutlich zu sehen sind auch die Seitenelemente 8 mit den darin ausgenommenen Schlitzen 5, die in Langlöcher 6 übergehen. In der Parkposition sind die Drehbolzen 4 mit den Endplatten 2 in dem Schlitz 5 geführt. Erst zum Erreichen der Montageposition wird der Rahmen 1 nach unten geschwenkt und anschließend innerhalb der Langlöcher 6 verschoben. Die Engstelle 16 bewirkt hierbei die schon erwähnte Verschiebesicherung.

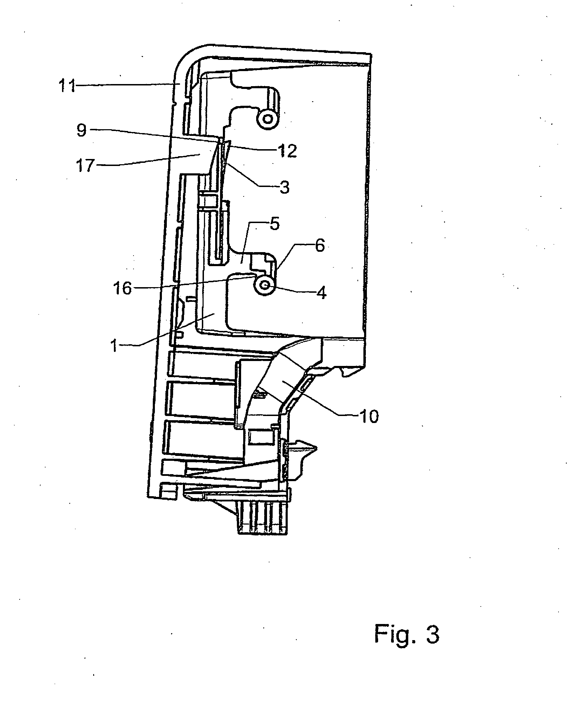

In Fig. 3 ist der Verschiebesicherungsmechanismus beim Aufsetzen eines Geräteeinbaudeckels 11 gezeigt. Über eine Nase 17 wird die Verriegelungszunge 3 des Rahmens 1 gegen das Klemmprofil 12 des Unterteils 10 nach unten gedrückt.

## Patentansprüche

1. Geräteträger für Leitungsführungskanäle, bestehend aus einem Unterteil (10) und einem von einer Parkposition in eine Montageendposition über seitliche Drehbolzen (4) schwenkbaren Rahmen (1), wobei das Unterteil (10) aus einem Gehäuse mit einem Boden (13) und Seitenelementen (8) besteht, in denen oben und unten zur Außenseite offene Schlitze (5) eingearbeitet sind, die jeweils in ein horizontales Langloch (6) übergehen und wobei seitlich am Rahmen (1) mit den Schlitzen (5) des Unterteils (10) kooperierende gleich beabstandete seitlich herausstehende Drehbolzen (4) ausgeformt sind, wobei zum Erreichen der Montageposition die Drehbolzen (4) des Rahmens (1) in den Langlöchern (6) der Seitenelemente (8) des Unterteils (10) geführt sind und in diesen von einer an den Drehbolzen (4) ausgeformten Endplatte (2) gehalten werden **dadurch gekennzeichnet, dass** an den beiden Seitenelementen (8) des Unterteils (10) Klemmprofile (12) ausgebildet sind, die zur Verschiebesicherung mit an den Seitenelementen (8) des Rahmens (1) seitlich ausgebildeten Verriegelungszungen (3) kooperieren, dass am Klemmprofil (12) der Seitenwand (8) des Unterteils (10) eine quer zur Längsseite der Seitenwand (8) verlaufende Nut (7) eingearbeitet ist, in die das Ende der Verriegelungszunge (3) greift, dass das Klemmprofil (12) an den Seitenelementen (8) des Unterteils (10) aus einer Kante (9) und einer Nut (7) besteht und, dass die Verriegelungszunge (3) leistenförmig und federnd ausgestaltet ist.

2. Geräteträger nach Anspruch 1, **dadurch gekennzeichnet, dass** für die Parkposition am Rahmen (1) eine Rippe (14) ausgebildet ist, die mit einer am Unterteil (10) ausgebildeten Haltenase (15) kooperiert, um den Rahmen (1) in Schwenkposition zu halten.

3. Geräteträger nach einem der vorhergehenden Ansprüche, **dadurch gekennzeichnet, dass** die Langlöcher (6) eine Engstelle (16) aufweisen.

4. Geräteträger nach einem der vorhergehenden Ansprüche, **dadurch gekennzeichnet, dass** die Endplatten (2) der Drehbolzen (4) zur Anzeige der Verschieberichtung pfeilförmig ausgestaltet sind.

5. Geräteträger nach einem der vorhergehenden Ansprüche, **dadurch gekennzeichnet, dass** am Rahmen (1) Taschen (18) für Anschlüsse (19) ausgebildet sind und der Rahmen (1) um 180 Grad verdreht in das Unterteil (10) einbaubar ist.

## Claims

1. Device carrier for cable guide channels, consisting of a lower part (10) and a frame (1), which can be pivoted from a parking position into an assembly end position by means of lateral pintles (4), wherein the lower part (10) consists of a housing with a base (13) and side elements (8), in which slots (5) that are open to the outside are incorporated at the top and bottom, said slots in each case passing into a horizontal elongate hole (6) and wherein equally spaced apart laterally protruding pintles (4) cooperating with the slots (5) of the lower part (10) are formed laterally on the frame (1), wherein to reach the assembly position, the pintles (4) of the frame (1) are guided in the elongate holes (6) of the side elements (8) of the lower part (10) and held therein by an end plate (2) formed on the pintles (4), **characterised in that** clamping profiles (12), which cooperate with locking tongues (3) formed laterally on the side elements (8) of the frame (1) to prevent displacement, are formed on the two side elements (8) of the lower part (10), **in that** incorporated on the clamping profile (12) of the side wall (8) of the lower part (10) is a groove (7), which runs transversely to the longitudinal side of the side wall (8) and in which the end of the locking tongue (3) engages, **in that** the clamping profile (12) on the side elements (8) of the lower part (10) consists of an edge (9) and a groove (7), **in that** the locking tongue (3) is strip-shaped and resilient.

2. Device carrier according to claim 1, **characterised in that** a rib (14), which cooperates with a holding lug (15) formed on the lower part (10) to hold the frame (1) in the pivot position, is formed on the frame (1) for the parking position.

3. Device carrier according to any one of the preceding claims, **characterised in that** the elongate holes (6) have a narrow point (16).

4. Device carrier according to any one of the preceding claims, **characterised in that** the end plates (2) of the pintles (4) are arrow-shaped to display the displacement direction.

5. Device carrier according to any one of the preceding claims, **characterised in that** pockets (18) for connections (19) are formed on the frame (1) and the frame (1) can be installed in the lower part (10) rotated through 180 degrees.

## Revendications

1. Support d'appareil pour des caniveaux de câblage, constitué d'une partie inférieure (10) et d'un cadre (1) pouvant pivoter d'une position d'arrêt dans une position finale de montage au moyen de pivots latéraux (4), sachant que la partie inférieure (10) consiste en un boîtier avec un fond (13) et des éléments latéraux (8) dans lesquels sont pratiquées des fentes (5) ouvertes en haut et en bas vers le côté extérieur, fentes qui se raccordent chacune à un trou oblong horizontal (6), et sachant que des pivots (4) latéralement saillants et équidistants, qui coopèrent avec les fentes (5) de la partie inférieure (10), sont formés latéralement sur le cadre (1), sachant qu'afin d'atteindre la position de montage, les pivots (4) du cadre (1) sont guidés dans les trous oblongs (6) des éléments latéraux (8) de la partie inférieure (10) et sont maintenus dans ceux-ci par une plaque terminale (2) formée sur les pivots (4), **caractérisé en ce que** des profils de serrage (12) sont formés sur les deux éléments latéraux (8) de la partie inférieure (10), profils qui coopèrent pour le blocage en translation avec des languettes de verrouillage (3) formées latéralement sur les éléments latéraux (8) du cadre (1), **en ce qu'**une rainure (7), s'étendant transversalement au côté longitudinal de la paroi latérale (8) et dans laquelle s'engage l'extrémité de la languette de verrouillage (3), est pratiquée sur le profil de serrage (12) de la paroi latérale (8) de la partie inférieure (10), **en ce que** le profil de serrage (12) sur les éléments latéraux (8) de la partie inférieure (10) est constitué d'une arête (9) et d'une rainure (7), et **en ce que** la languette de verrouillage (3) est réalisée en forme de barrette et à effet de ressort.

2. Support d'appareil selon la revendication 1, **caractérisé en ce qu'**une nervure (14) est formée sur le cadre (1) pour la position d'arrêt, nervure qui coopère avec un ergot de maintien (15), formé sur la partie inférieure (10), pour maintenir le cadre (1) en position pivotée.

3. Support d'appareil selon l'une des revendications précédentes, **caractérisé en ce que** les trous oblongs (6) présentent un passage resserré (16).

4. Support d'appareil selon l'une des revendications précédentes, **caractérisé en ce que** les plaques terminales (2) des pivots (4) sont réalisées en forme de flèche afin d'indiquer la direction de translation.

5. Support d'appareil selon l'une des revendications précédentes, **caractérisé en ce que** des poches (18) pour des connexions (19) sont formées sur le cadre (1), et le cadre (1) peut être monté dans la partie inférieure (10) en étant tourné à 180 degrés.
